# EUROPÄISCHE PATENTSCHRIFT

(11) **EP 3 321 645 B1**
(45) Veröffentlichungstag und Bekanntmachung des Hinweises auf die Patenterteilung: **23.02.2022**
(21) Anmeldenummer: 17001747.9
(22) Anmeldetag: 24.10.2017
(51) Int. Cl.: G01F 1/66, G01F 15/00

(54) **ULTRASCHALLZÄHLER**
ULTRASONIC FLOW COUNTER
COMPTEUR D'ÉCOULEMENT À ULTRASONS

(30) Priorität: 15.11.2016 DE 102016013607
(43) Veröffentlichungstag der Anmeldung: 16.05.2018
(73) Patentinhaber: Diehl Metering GmbH, 91522 Ansbach (DE)
(72) Erfinder: SONNENBERG, Hans-Michael, 91522 Ansbach (DE)
(74) Vertreter: Diehl Patentabteilung

(56) Entgegenhaltungen:
- EP-A1- 0 565 851
- EP-A1- 1 701 140
- EP-A1- 3 267 158
- WO-A1-2016/012024
- US-A1- 2006 288 798
- US-A1- 2009 100 940

## Beschreibung

Die Erfindung betrifft einen Ultraschallzähler zur Erfassung einer Durchflussmenge eines Fluids mit einem Fluideinlass, einem Fluidauslass und einem den Fluideinlass mit dem Fluidauslass verbindenden Strömungskanal, wobei der Strömungskanal ein Messrohr aufweist, das sich geradlinig in eine Strömungsrichtung erstreckt.

Ultraschallmesser zur Erfassung von Durchflussmengen von Fluiden, beispielsweise von Flüssigkeiten oder Gasen, insbesondere von Wasser, sollen eine möglichst präzise Erfassung der Durchflussmenge auch bei einer hohen Dynamik der Strömung ermöglichen. Die Erfassung der Durchflussmenge soll hierbei insbesondere robust gegenüber inneren und äußeren Störeinflüssen sein. Wesentlich ist hierbei die Stabilisierung der Strömung im Messbereich. Insbesondere soll ein plötzliches Umschlagen der Störung, beispielsweise bei einer bestimmten Durchflussmenge, vermieden werden, da ein derartiges Umschlagen zu einer veränderten Messkurve führen kann. Da der Umschlagpunkt von einer Vielzahl von Faktoren, wie beispielsweise von der Temperatur und einem Alterungszustand des Ultraschallzählers, abhängig sein kann, ist eine zuverlässige Kompensation einer solchen Änderung kaum möglich.

US2009/0100940 A1 offenbart einen Ultraschallzähler mit einem Messrohr, das an definierten Sensorpositionen Verformungen aufweist, um eine Durchflussgeschwindigkeit anzupassen. Die Bohrungenstellen stellen jedoch keine Durchbrechungen dar, die die Tiefe einer Rille zur Stabilisierung der Strömungsführung lokal erhöhen. Die Bohrungen dienen dazu, jeweils einen Ultraschallsensor aufzunehmen.

EP1701140 A1 betrifft einen Ultraschallmesskanal zur Durchflussmessung eines strömenden Mediums. Eine Oberfläche des mit Ultraschallwellensignalen beschickten Messkanals weist zumindest teilweise periodische und/oder zumindest teilweise aperiodische Ausnehmungen auf, die zur Absorption von an der Oberfläche reflektierten bzw. gebeugten Ultraschallwellen dienen. Nuten können hierbei vorgesehen sein, die parallel zu einer Zentralachse des Messkanals verlaufen. Die Nuten können sich auch mit ringförmigen Ausnehmungen abwechseln.

Eine Möglichkeit, plötzliche Strömungsumschläge zu verringern oder zu verhindern ist es, die Strömung vor einem Eintritt in ein Messrohr zu verwirbeln. Hierzu schlägt die Druckschrift EP 0 565 851 A1 vor, die Strömung im Wesentlichen senkrecht zur Durchflussrichtung des Messrohrs zu dem Messrohr zu führen und in einem Einflussbereich des Messrohrs das Messrohr verlängernde Stege vorzusehen, durch die diese Ströme verwirbelt wird.

Der Erfindung liegt die Aufgabe zugrunde, die Strömungsführung im Bereich eines Messrohrs des Ultraschallzählers weiter zu verbessern, um hohen Anforderungen bezüglich der Messgenauigkeit und der Dynamik der Messung zu entsprechen.

Die Aufgabe wird erfindungsgemäß durch einen Ultraschallzähler der eingangs genannten Art gelöst, wobei eine Innenwand einer einen Strömungsquerschnitt des Messrohrs begrenzenden Seitenwand wenigstens eine sich in Strömungsrichtung erstreckende Rille aufweist, die den Strömungsquerschnitt vergrößert, wobei die Seitenwand ausschließlich innerhalb der Rille eine Durchbrechung aufweist, die eine Rillentiefe der Rille (14) zur Stabilisierung der Strömungsführung lokal erhöht, und/oder eine Stufe in Strömungsrichtung zwischen einem Normalbereich und einem Vertiefungsbereich aufweist, wobei in dem Vertiefungsbereich eine Rillentiefe der Rille größer als in dem Normalbereich ist.

Erfindungsgemäß wird statt einem Messrohr mit einem beispielsweise im Wesentlichen kreisförmigen Strömungsquerschnitt ein Messrohr genutzt, dessen Seitenwand in Umfangsrichtung mehrere Rillen mit dazwischen liegenden Erhebungsbereichen aufweist. Die Rillen können trapezförmig sein bzw. die Innenfläche der Seitenwand kann ein Trapezprofil aufweisen. Es ist auch möglich, dass Kanten in einem derartigen Profil abgerundet sind. Das Profil der Innenfläche kann auch wellenförmig sein. Es wurde erkannt, dass eine entsprechende Form der Seitenwand zu einer Stabilisierung des Strömungsprofils in dem Messrohr beitragen kann. Für eine optimale Strömungsführung wäre es in vielen Fällen vorteilhaft, eine große Rillentiefe der Rillen zu verwenden oder die Breite dieser Rillen möglichst weit zu reduzieren. Zugleich soll der Strömungsquerschnitt des Messrohrs nicht zu stark reduziert werden, um den Druckabfall am Messrohr gering zu halten. Hieraus resultiert, dass die Rillentiefe durch den verfügbaren Bauraum begrenzt ist. Zudem kann die Breite der Rillen nicht allzu stark reduziert werden, da es sonst möglich ist, dass sich beispielsweise Schwebstoffe in diesen Rillen festsetzen und diese somit verschmutzen. Um trotz dieser vorgegebenen Designgrenzen eine möglichst gute Stabilisierung des Strömungsprofils zu erreichen, wird erfindungsgemäß wenigstens eine der Rillen modifiziert, indem eine Durchbrechung der Seitenwand bzw. eine Stufe zu einem Vertiefungsbereich vorgesehen werden. Hierdurch wird die Tiefe der Rillen lokal erhöht, wodurch die Strömungsführung weiter stabilisiert werden kann. Im Fall der Durchbrechung wird die Rillentiefe zumindest um die Wandstärke des Messrohrs erhöht, wenn das Messrohr beispielsweise im Bereich der Durchbrechung bündig an einem Gehäuse des Ultraschallzählers oder einer anderen Komponente des Ultraschallzählers anliegt. Wie später noch detailliert erläutert, ist es auch möglich, dass die Durchbrechung in einem fluidgefüllten Austauschvolumen endet, das beispielsweise fluidisch mit dem Fluidauslass verbunden ist. Dies bewirkt effektiv eine weitere Zunahme der Rillentiefe, da die Strömung teilweise durch das Austauschvolumen geführt werden kann.

In den Erhebungsbereichen sind erfindungsgemäß keine Stufen oder Durchbrechungen vorgesehen. Der Abstand zwischen einer Mittelgerade des Messrohrs und der Seitenwand im jeweiligen Erhebungsbereich kann bei einem im Wesentlichen kreisförmigen Strömungsprofil konstant sein oder sich kontinuierlich in Strömungsrichtung ändern, beispielsweise um eine geringfügig konische Form des Messrohres auszubilden. Die Änderung des Strömungsquerschnitts in Strömungsrichtung kann derart erfolgen, dass eine Steigung von weniger als 2°, insbesondere eine Steigung zwischen 0,5° und 2° oder zwischen 0,7° und 1° erreicht wird. Die Durchbrechung bzw. der Vertiefungsbereich kann schlitzförmig sein. Insbesondere kann die Ausdehnung der Durchbrechung bzw. des Vertiefungsbereichs in Strömungsrichtung größer sein als in Umfangsrichtung des Messrohrs. Es ist im erfindungsgemäßen Ultraschallzähler möglich, dass jede der Rillen eine Durchbrechung und/oder eine Stufe zu einem Vertiefungsbereich aufweist. Die Durchbrechungen bzw. Vertiefungsbereiche können sich für alle Rillen über den gleichen Messrohrabschnitt in Strömungsrichtung erstrecken.

Der Wechsel zwischen zwischen den Rillen liegenden Erhebungsbereich und Rillen in Umfangsrichtung des Messrohres kann vorzugsweise periodisch erfolgen. Die verschiedenen Erhebungsbereiche und Rillenkönnen jeweils gleich zueinander ausgebildet sein oder sich voneinander unterscheiden. Beispielsweise kann die Tiefe der verschiedenen Rillen voneinander unterschiedlich sein.

Der erfindungsgemäße Ultraschallzähler kann beispielsweise derart ausgebildet sein, dass der Strömungskanal durch ein rohrförmiges Gehäuse des Ultraschallzählers gebildet wird. In dieses Gehäuse kann das Messrohr derart eingesetzt sein, dass ein Fluidaustausch zwischen dem Fluideinlass und dem Fluidauslass innerhalb des Ultraschallzählers ausschließlich über das Messrohr möglich ist. Die Erfassung der Durchflussmenge kann derart erfolgen, dass ein Ultraschallsignal im Wesentlichen parallel zu der Strömungsrichtung durch das Messrohr gesendet wird. In Abhängigkeit einer Frequenzverschiebung und/oder einer Laufzeit dieses Ultraschallsignals kann die Durchflussmenge bestimmt werden. Derartige Verfahren sind im Stand der Technik bekannt und sollen nicht detailliert beschrieben werden. Zum Aussenden bzw. zum Empfang des Ultraschallsignals können Ultraschallwandler genutzt werden, die in einer Seitenwand des Gehäuses angeordnet sind und die das Ultraschallsignal im Wesentlichen senkrecht zur Strömungsrichtung aussenden bzw. empfangen können. Zur Umlenkung des Ultraschallsignals können fluideinlassseitig und/oder fluidauslassseitig des Messrohrs jeweils Reflektionselemente vorgesehen sein, die das Ultraschallsignal umlenken. Diese können an dem Gehäuse und/oder an dem Messrohr, insbesondere über zugeordnete Halteelemente, befestigt sein oder einteilig mit dem Gehäuse bzw. dem Messrohr ausgebildet sein.

Die Innenwand kann mehrere Rillen aufweisen, wobei eine der Rillen die Durchbrechung und/oder die Stufe aufweist oder wobei mehrere der Rillen eine jeweilige Durchbrechung und/oder eine jeweilige Stufe aufweisen.

Die Rillen können jeweils einen ebenen oder kreissegmentförmigen Rillenboden und gewinkelt zu dem Rillenboden verlaufende Rillenwände aufweisen. Der Rillenboden kann im Wesentlichen senkrecht auf den Rillenwänden stehen oder mit diesen einen stumpfen Winkel einschließen. Bei der Durchbrechung kann es sich insbesondere um eine Durchbrechung des Rillenbodens handeln. Hierbei kann der gesamte Rillenboden im Bereich der Durchbrechung durchbrochen sein oder es kann nur ein Teilbereich des Rillenbodens durchbrochen sein. Sind angeschrägte Rillenwände vorgesehen, kann die Durchbrechung zusätzlich auch einen Abschnitt einer oder beider Wände durchbrechen. Die Kreissegmentform des Rillenbodens kann derart gewählt sein, dass die Innenfläche der Seitenwand in dem Abschnitt des Rillenbodens ein Segment eines Kreises um die Mittelgerade des Messrohrs bildet.

Die Durchbrechung kann ein von der Innenfläche der Seitenwand des Messrohres eingefasstes Messvolumen mit einem an eine Außenfläche der Seitenwand angrenzenden Austauschvolumen verbinden, um einen Fluidaustausch zwischen diesen Volumen zu ermöglichen. Hierbei ist es insbesondere möglich, dass der Ultraschallzähler ein Dichtelement aufweist, das das Austauschvolumen von dem Fluideinlass trennt, so dass ein Fluidaustausch zwischen Fluideinlass und Austauschvolumen in dem Ultraschallzähler ausschließlich über das Messrohr möglich ist. Es ist möglich, dass ein fluidauslassseitiges Fluidvolumen des Ultraschallzählers direkt mit dem Austauschvolumen gekoppelte ist bzw. dieses bildet, so dass ein Fluidaustausch zwischen dem Fluidauslass und dem Austauschvolumen innerhalb des Ultraschallzählers auch außerhalb des Messrohrs möglich ist. Insbesondere kann das Messrohr fluidauslassseitig frei in dem fluidauslassseitigen Volumen enden, das das Austauschvolumen bildet.

Das Dichtelement kann an einem fluideinlassseitigen Ende des Messrohrs angeordnet sein. Somit muss das gesamte Fluid zwingend den Einlass des Messrohrs passieren. Es ist nicht notwendig erforderlich, dass Strömungsteile, die von dem Messrohr in das Austauschvolumen eintreten, in das Messrohr zurückgeführt werden. Daher kann das Austauschvolumen direkt mit dem Fluidauslass verbunden sein, wodurch ein Druckabfall am Messrohr weiter reduziert werden kann.

Das Dichtelement kann insbesondere einteilig mit dem Messrohr ausgebildet sein. Es kann materialidentisch sein und gemeinsam mit dem Messrohr, beispielsweise in einem Spritzgussverfahren, hergestellt werden. Das Dichtelement kann als ein Kragen ausgebildet sein, der sich an einem fluideinlassseitigen Ende des Messrohrs radial von der Seitenwand des Messrohrs nach außen erstreckt.

Die Durchbrechung und/oder der Vertiefungsbereich kann sich bis zu einem dem Fluidauslass zugewandten Ende des Messrohres erstrecken. Dies ist besonders in Fällen vorteilhaft, in denen ein eingangs erläutertes Reflektionselement im Strömungspfad angeordnet ist. Aufgrund der Durchbrechung oder des Vertiefungsbereichs am Rohrende kann die Strömung ein entsprechendes Reflektionselement leichter umströmen. Insgesamt kann ein Druckabfall in dem Ultraschallzähler reduziert werden und es können plötzliche Strömungsumschläge am Reflektor reduziert oder vermieden werden.

In einer alternativen Ausführungsform ist es möglich, dass die Durchbrechung und/oder der Vertiefungsbereich sowohl von einem dem Fluidauslass zugewandten Ende als auch von einem dem Fluideinlass zugewandten Ende des Messrohrs beabstandet sind. Beispielsweise kann in wenigstens einer Rille eine Durchbrechung bzw. ein Vertiefungsbereich vorgesehen sein, die sich in Strömungsrichtung im Wesentlichen symmetrisch zu einer Mitte des Messrohres bzw. eines mithilfe des Messrohr realisierten Messbereichs erstreckt. Dies kann, je nach konkreter Ausführungsform des Ultraschallzählers, das Strömungsprofil in für die Messung besonders relevanten Bereichen stabilisieren.

In dem Fall, dass die Seitenwand mehrere Rillen aufweist, die jeweils eine Durchbrechung und/oder eine Stufe aufweisen, können die Wandstärken der Seitenwand im Bereich wenigstens zweier Durchbrechungen und/oder die Abmessungen wenigstens zweier Durchbrechungen und/oder wenigstens zweier Vertiefungsbereiche in Strömungsrichtung und/oder Umfangsrichtung und/oder die Positionen wenigstens zweier Durchbrechungen und/oder wenigstens zweier Stufen bezüglich der jeweiligen Rille und/oder die Höhen wenigstens zweier Stufen voneinander unterschiedlich sein. Hierdurch kann eine Symmetrie eines Strömungsprofils weiter gestört werden. Symmetrien des Strömungsprofils können dazu führen, dass bei einer geringfügigen Störung der Symmetrie ein plötzlicher Strömungsumschlag erfolgt. Durch eine gezielte Störung dieser Symmetrie können entsprechende Strömungsumschläge weitgehend verhindert oder reduziert werden, wodurch die Robustheit der Messung insgesamt verbessert werden kann.

In einem die Durchbrechung begrenzenden Abschnitt der Seitenwand können die Wandstärke der Seitenwand und/oder die Position der Außenfläche der Seitenwand senkrecht zur Strömungsrichtung entlang des Randes der Durchbrechung variieren. Eine entsprechende Variation kann insbesondere für verschiedene der Durchbrechungen unterschiedlich sein. Auch durch dieses Vorgehen kann eine Symmetrie des Strömungsprofils mit den vorangehend erläuterten Vorteilen gebrochen werden.

Eine weitere Möglichkeit die Symmetrie des Strömungsprofils zu brechen ist es, die Rillentiefe der Rillen anzupassen. So kann die Rillentiefe in verschiedenen der Rillen an einer in Strömungsrichtung betrachtet gleichen Position voneinander unterschiedlich sein. Insbesondere gilt dies über die gesamte Länge des Messrohres. Umfassen die Rillen wie vorangehend erläutert Rillenböden und Rillenwände, können insbesondere die Rillenböden der verschiedenen Rillenbereiche voneinander unterschiedlich weit von einer Mittelgerade des Messrohrs beabstandet sein.

Die Breite in Umfangsrichtung der oder jeder Rille und/oder des oder jedes Vertiefungsbereichs und/oder der oder jeder Durchbrechung kann in Richtung des Fluidauslasses zunehmen. Wie bereits eingangs zu den Rillen erläutert, ist es möglich, dass entsprechende Strukturen des Messrohres verschmutzen und somit ihre Funktion nicht mehr oder nur noch eingeschränkt erfüllen können. Durch die erläuterte Verbreiterung der entsprechenden Strukturen in Richtung des Fluidauslasses kann eine Partikelfestsetzung verhindert oder vermindert werden, da Partikel leichter wieder aus diesen Strukturen ausgespült werden können.

Der Strömungsquerschnitt kann sich zumindest in einem Abschnitt des Rohres in Richtung des Fluidauslasses kontinuierlich verkleinern, um die Strömungsgeschwindigkeit des Fluids kontinuierlich zu erhöhen. Der Abschnitt liegt insbesondere fluideinlassseitig der Durchbrechung bzw. der Stufe. Im Bereich der Durchbrechung bzw. der Stufe und/oder stromabwärts hiervon, das heißt in Richtung des Fluidauslasses, kann der Abstand der Mittelgerade des Messrohrs zu der Seitenwand in den Erhebungsbereichen und/oder den Rillenbereichen vorzugsweise konstant sein oder sich erhöhen. Es ist somit möglich, dass der Strömungsquerschnitt im Bereich der Durchbrechung bzw. der Stufe und/oder fluidauslassseitig hiervon durch eine entsprechende Führung der Seitenwand erhöht wird. Die Erhöhung der Strömungsgeschwindigkeit des Fluids kann dazu dienen, die Strömung weiter zu stabilisieren und somit die Robustheit der Durchflussmessung weiter zu verbessern.

Die Innenfläche der Seitenwand kann in zumindest 30 % des Umfangs des Messrohrs durch außerhalb der Rille oder zwischen den Rillen liegende Erhebungsbereiche gebildet sein. Dies kann insbesondere für die gesamte Länge des Messrohrs zutreffen. Vorzugsweise werden zumindest 40 %, insbesondere zumindest 50 %, der Seitenwand durch die Erhebungsbereiche gebildet. Vorzugsweise werden weniger als 80 %, insbesondere weniger als 60%, der Seitenwand in Umfangsrichtung durch die Erhebungsbereiche gebildet. Die vorangehend erläuterte Aufteilung des Umfangs in Erhebungsbereiche und Rillen ermöglicht die Ausbildung relativ schmaler Rillen, die, wie im Rahmen der Erfindung erkannt wurde, besonders vorteilhaft für eine Stabilisierung des Strömungsprofils sind, stellt jedoch zugleich sicher, dass die Rillen ausreichend breit sind, dass keine Verstopfung durch eine Verschmutzung erfolgt.

Die Wandstärke der Seitenwand kann zumindest in dem Bereich der Durchbrechung wenigstens 20 % der Rillentiefe betragen. Sie kann insbesondere wenigstens 30 % der Rillentiefe und vorzugsweise weniger als 150 %, insbesondere weniger als 70 %, der Rillentiefe betragen. Bei einem Durchbrechen der Seitenwand wird die Rillentiefe um wenigstens die Wandstärke erhöht. Die angegebenen Wandstärken können somit zur Optimierung der Rillenvertiefung bei einem vorgegebenen möglichen Bauraum dienen.

Die Ausdehnung des Vertiefungsbereichs und/oder der Durchbrechung in Strömungsrichtung kann wenigstens 5 % der Länge des Messrohrs betragen. Vorzugsweise entspricht die Ausdehnung in Strömungsrichtung wenigstens 10 % der Länge des Messrohrs, wobei die Ausdehnung zudem vorzugsweise kleiner als 90 %, insbesondere kleiner als 70 %, der Länge des Messrohrs ist. In den angegebenen Längenbereichen kann der Vertiefungsbereich bzw. die Durchbrechung besonders effizient zur Stabilisierung des Strömungsprofils beitragen.

Der Ultraschallzähler kann fluidauslassseitig ein gewinkelt zu der Strömungsrichtung stehendes Relektionselement aufweisen, durch das Ultraschall von einem Ultraschallwandler in das Messrohr oder umgekehrt reflektierbar ist, wobei das Reflektionselement in einem ersten Umfangsabschnitt des Messrohres weiter von dem Messrohr entfernt ist als in einem zweiten Umfangsabschnitt, wobei ausschließlich eine Rille oder mehrere Rillen in dem zweiten Umfangsabschnitt eine Durchbrechung und/oder eine Stufe aufweist oder aufweisen. Anders ausgedrückt sind ausschließlich in dem zweiten Umfangsabschnitt, in dem sich das Reflektionselement relativ nahe an dem Messrohr befindet, Durchbrechungen und/oder Stufen anordenbar. Dies ist vorteilhaft, da durch eine entsprechende Anordnung der Durchbrechungen bzw. Stufen der Strömungsquerschnitt des Messrohrs gezielt derart erweitert wird, dass das Reflektionselement besonders leicht umströmt werden kann, wodurch Stauungen des zu messenden Fluids an dem Relektionselement vermieden werden können.

Die Innenwand kann genau eine Rille oder beispielsweise zwischen zwei und zehn Rillen oder auch mehr Rillen aufweisen.

Weist die Innenwand wenigstens zwei Rillen auf, so können wenigstens zwei Erhebungsbereiche der Innenwand, die sich jeweils zwischen zwei der Rillen erstrecken, voneinander unterschiedliche Ausdehnungen in Umfangsrichtung aufweisen. Dies kann vorteilhaft sein, um eine Rotationssymmetrie oder eine andere Symmetrie der Fluidströmung zu brechen, wodurch die Strömung durch das Messrohr stabilisiert werden kann.

Der Strömungsquerschnitt des Messrohres kann abgesehen von den Rillen die Form eines Kreises oder eines Ovals oder eines Vielecks aufweisen. Häufig werden kreisförmige oder ovale Messrohre gewählt. Im erfindungsgemäßen Ultraschallzähler ist es jedoch auch möglich, beispielsweise rechteckige, quadratische, sechseckige oder achteckige Strömungsquerschnitte zu wählen. Eckige Strömungsquerschnitte können genutzt werden, um eine Symmetrie einer Fluidströmung zu brechen, wodurch die Fluidströmung stabilisiert werden kann.

Jene Variante des erfindungsgemäßen Ultraschallzählers, die ausschließlich innerhalb der Rille oder der Rillen eine Durchbrechung aufweist, kann derart weitergebildet werden, dass zusätzlich eine Rillenwandstufe an wenigstens einer Rillenwand wenigstens einer Rille und/oder eine Innenwandstufe außerhalb der Rille vorgesehen ist. Weist die Rille einen Rillenboden und gewinkelt dazu stehende Rillenwände auf, ist es möglich, dass ausschließlich der Rillenboden durchbrochen ist, wobei die Rillenwände eine Rillenwandstufe in Strömungsrichtung aufweisen, an der sich die Rillenbreite bzw. der Abstand der beiden Rillenwände voneinander zur Richtung des Fluidauslasses hin vergrößert. Ergänzend oder alternativ kann die Innenwand außerhalb der Rille oder der Rillen eine Seitenwandstufe aufweisen, an der sich der Strömungsquerschnitt zur Richtung des Fluidauslasses hin vergrößert.

Vorzugsweise können die Rillenwandstufe und/oder die Seitenwandstufe in Strömungsrichtung auf der gleichen Höhe angeordnet sein wie der Rand der Durchbrechung in der Rille. In Umfangsrichtung kann somit durch den Rand der Durchbrechungen gemeinsam mit den Rillenwandstufen und/oder den Seitenwandstufen eine umlaufende Kante des Messrohres gebildet werden.

Eine derartige Ausgestaltung des Messrohrs ist besonders dann vorteilhaft, wenn das Messrohr durch ein Spritzgussverfahren hergestellt werden soll. Beispielsweise kann das Messrohr in diesem Fall so geformt werden, dass sich der Strömungsquerschnitt des Messrohres durch eine konische Form des Messrohres zunächst in Strömungsrichtung verengt, bis jener Bereich erreicht wird, in dem die Durchbrechungen beginnen. Ausgehend von diesem Punkt kann sich der Strömungsquerschnitt konisch wieder erweitern. Eine Spritzgussform kann somit an jener Fläche zusammengesetzt sein, an der die Durchbrechungen beginnen.

An der Stelle, an der Spritzgussformen zusammengesetzt sind, entsteht typischerweise ein Entformungsgrad. Dies kann bei der beschriebenen Ausbildung verhindert werden, da die Zusammensetzebene der Spritzgussform mit der Seitenwandstufe bzw. der Rillenwandstufe zusammenfällt, womit an der Zusammensetzebene kein ebener Wandabschnitt senkrecht zur Zusammensetzebene hergestellt werden muss. Die beschriebene Ausgestaltung des Messrohres ermöglicht somit einen einfachen und sehr stabilen Spritzgussprozess, wobei die aus den Stufen resultierende Strömungsquerschnitterweiterung zudem ein verbessertes Umströmen eines fluidauslassseitigen Reflexionselements ermöglichen kann.

Weitere Vorteile und Einzelheiten der Erfindung ergeben sich aus den folgenden Ausführungsbeispielen sowie den zugehörigen Zeichnungen. Hierbei zeigen:
- Fig. 1: ein Ausführungsbeispiel eines erfindungsgemäßen Ultraschallzählers,
- Fig. 2 und 3: Detailansichten des in Fig. 1 gezeigten Ultraschallzählers, die das genutzte Messrohr zeigen,
- Fig. 4 - 6: verschieden Ausgestaltungsmöglichkeiten des jeweiligen Messrohrs für weitere Ausführungsbeispiele des erfindungsgemäßen Ultraschallzählers,
- Fig. 7: ein weiteres Ausführungsbeispiel eines erfindungsgemäßen Ultraschallzählers, und
- Fig. 8 bis 10: weitere Ausgestaltungsmöglichkeiten des jeweiligen Messrohrs für weitere Ausführungsbeispiele des erfindungsgemäßen Ultraschallzählers.

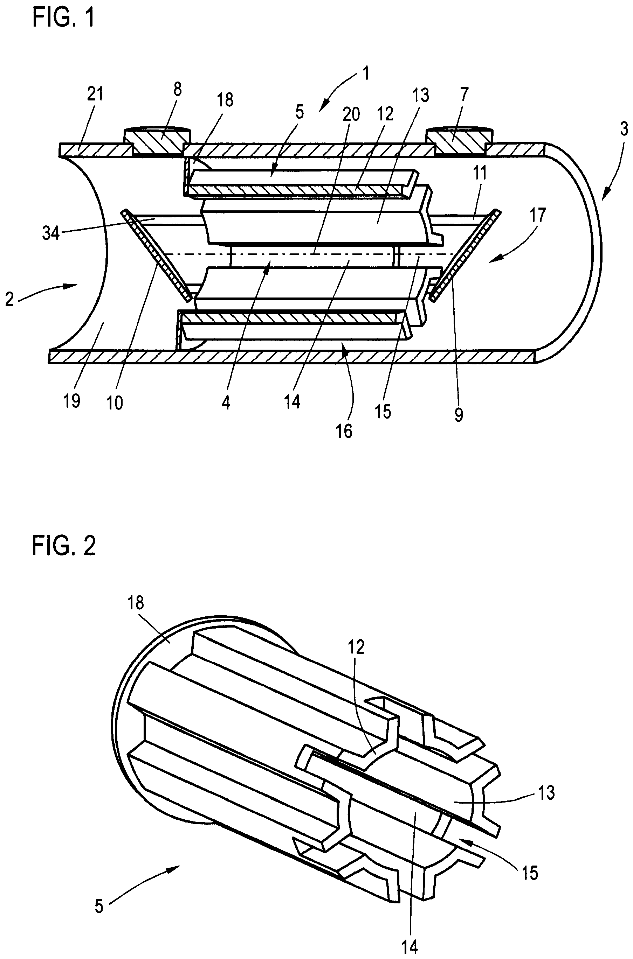

Fig. 1 zeigt einen Ultraschallzähler 1 zur Erfassung einer Durchflussmenge eines Fluids. Der Ultraschallzähler 1 weist einen Fluideinlass 2 und einen Fluidauslass 3 auf, die mit einem Fluidnetz verbindbar sind. Ein Strömungskanal 4 verbindet den Fluideinlass 2 mit dem Fluidauslass 3. In dem Strömungskanal 4 ist ein Messrohr 5 angeordnet, das sich geradlinig in eine Strömungsrichtung erstreckt.

Zur Messung der Durchflussmenge wird eine Durchflussgeschwindigkeit des Mediums bestimmt, indem ein Ultraschallsignal im Wesentlichen parallel zur Strömungsrichtung durch das Messrohr 5 gesendet wird und eine Laufzeit und/oder eine Frequenzverschiebung des Ultraschallsignals ausgewertet werden. Dieses Vorgehen ist grundsätzlich im Stand der Technik bekannt und soll nicht detailliert erläutert werden. Die Ultraschallwandler 7, 8 zur Bereitstellung bzw. zum Empfang des Ultraschallsignals sind an der Seitenwand eines Gehäuses 21 angeordnet, dass zumindest Abschnitte des Strömungskanals 4 ausbildet. Das Senden und der Empfang der Ultraschallsignale durch die Ultraschallwandler 7, 8 können näherungsweise orthogonal zur Strömungsrichtung erfolgen. Um das Ultraschallsignal innerhalb des Messrohrs im Wesentlichen parallel zur Strömungsrichtung zu führen, sind daher die Reflektionselemente 9, 10 vorgesehen, die in dem gezeigten Beispiel über die Halteelemente 11, 34 an dem Messrohr 5 gehaltert sind. Alternativ könnten die Reflektorelemente 9, 10 auch am Gehäuse 21 gehaltert sein.

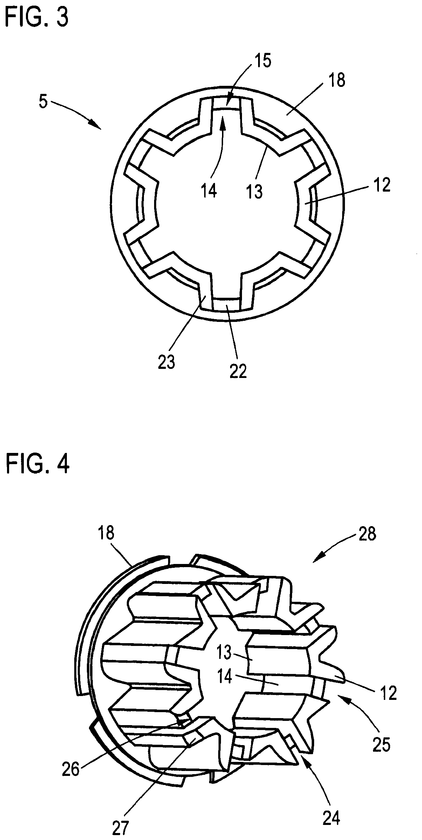

Würde in der gezeigten Anordnung ein Messrohr 5 verwendet, dessen Seitenwand durchgängig eben ist, könnten Stauungen, die beispielsweise bei bestimmten Durchflussmengen an den Reflektorelementen 9, 10 auftreten können, zu einem plötzlichen Umschlagen der Strömung im Strömungskanal 4 führen. Daher wird in dem Ultraschallzähler 1 ein alternatives Messrohr genutzt, das in den Fig. 2 und 3 aus unterschiedlichen Perspektiven dargestellt ist. Die Seitenwand 12 des Messrohrs 5 ist derart in Umfangsrichtung des Messrohrs 5 geformt, dass in Umfangsrichtung betrachtet abwechselnd Erhebungsbereiche 13 und Rillen 14 entstehen, wobei die Innenfläche der Seitenwand 12 in den Rillen 14 weiter von einer in Strömungsrichtung verlaufenden Mittelgerade 20 des Messrohrs beabstandet ist als in den Erhebungsbereichen 13. Die Rillen 14 weisen hierbei einen kreissegmentförmigen Rillenboden 22 und gegenüber einer Radialrichtung des Messrohrs angeschrägte Rillenwände 23 auf. Das Profil der Innenfläche ist somit im Wesentlichen ein Trapezprofil. Es wäre auch möglich, Kanten in diesem Profil abzurunden bzw. ein Wellenprofil zu nutzen.

Um die Stabilität der Strömung in dem Messrohr 5 weiter zu erhöhen sind ausschließlich in den Rillen 14 Durchbrechungen 15 der Seitenwand 12 vorgesehen. Die Durchbrechungen 15 verbinden ein von der Innenfläche der Seitenwand 12 des Messrohrs 5 eingefasstes Messvolumen mit einem an eine Außenfläche des Messrohres 5 angrenzenden Austauschvolumen 16. Das Austauschvolumen 16 ist, wie in Fig. 1 dargestellt ist, unmittelbar mit einem fluidauslassseitigen Fluidvolumen 17 verbunden. Ein Dichtelement 18, das einteilig mit dem Messrohr 5 ausgebildet ist, trennt das Ausgleichsvolumen 16 hingegen von einem fluideinlassseitigen Fluidvolumen 19. Hierdurch ist sichergestellt, dass in dem Ultraschallwandler 1 Fluid nur von dem Fluideinlass 2 zu dem Fluidauslass 3 gelangen kann, indem es das Messrohr 5 passiert.

In einer alternativen Ausführungsform des Ultraschallwandlers wäre es möglich, dass die Außenfläche des Messrohres 5 zumindest in dem Bereich der Durchbrechung bündig auf dem Gehäuse 21 aufliegt. In diesem Fall würde durch die Durchbrechung eine Vertiefung der Rillen 14 am fluidauslassseitigen Ende des Messrohres 5 um die Wandstärke der Seitenwand 12 erreicht.

Die Durchbrechungen 15 der Seitenwand 12 erfüllen mehrere Funktionen. Einerseits führt das Vorsehen der Durchbrechungen 15 dazu, dass ein Strömungsquerschnitt im Ausflussbereich des Messrohres 5 vergrößert wird. Hierdurch kann das Fluid leichter an dem Reflektorelement 9 vorbeigeführt werden, womit einerseits ein Druckabfall an dem Ultraschallwandler reduziert wird und andererseits die Gefahr von Strömungsumschlägen aufgrund von Stauungen am Reflektorelement 9 reduziert werden kann. Andererseits wurde festgestellt, dass die Rillen 14 des Messrohrs 5 insbesondere dann die Stabilität der Strömung erhöhen können, wenn sie relativ tief sind. Das Vorsehen der Durchbrechungen 15 führt dazu, dass faktisch tiefere Rillen realisiert werden. Dies erfolgt durch einen stufenartigen Übergang, der ebenfalls zur Stabilisierung der Strömung beitragen kann. Das Vorsehen dieser Durchbrechungen ermöglicht es somit, die Rillen lokal zu vertiefen, ohne den Bauraumbedarf des Ultraschallwandlers 1 zu erhöhen.

Fig. 4 zeigt ein alternatives Messrohr 28, das statt dem Messrohr 5 in dem Ultraschallwandler 1 genutzt werden kann. Der Aufbau des Messrohrs 28 entspricht im Wesentlichen den Aufbau des Messrohrs 5, wobei im Gegensatz zu dem Messrohr 5, bei dem alle Durchbrechungen 15 gleich ausgebildet sind, die verschiedenen Durchbrechungen 24, 25, 26 in dem Messrohr 28 unterschiedlich ausgebildet sind. Die Struktur der Durchbrechung 24 entspricht im Wesentlichen der Struktur der Durchbrechungen 15 des Messrohrs 5. Die Durchbrechung 25 unterscheidet sich hiervon dadurch, dass die Wandstärke der Seitenwand 12 im Bereich der Durchbrechung 25 an verschiedenen Seiten der Durchbrechung 25 unterschiedlich ist, womit auch der Abstand der Außenfläche der Seitenwand 12 von der aus Übersichtlichkeitsgründen nicht gezeigten Mittelgerade des Messrohrs 28 für die unterschiedlichen Seiten der Durchbrechung 25 unterschiedlich ist. Die Durchbrechung 26 unterscheidet sich von der Durchbrechung 24 dadurch, dass zum Ende des Messrohrs 28 hin die Durchbrechung 26 nicht nur den Rillenboden, sondern auch die Rillenwand im Bereich 27 durchbricht. Die Durchbrechungen 24, 25, 26 weisen somit unterschiedliche Wandstärken der Seitenwand im Bereich der Durchbrechungen 24, 25, 26 bzw. verschiedene Abmessungen der Durchbrechungen 24, 25, 26 auf.

In alternativen Ausführungsbeispielen könnte eine Symmetrie des Strömungsprofils zusätzlich oder alternativ dadurch gebrochen werden, dass die Positionen der Durchbrechungen 24, 25, 26 in Strömungsrichtung und/oder in Umfangsrichtung bezüglich der jeweiligen Rille 14 und/oder die Tiefe der Rillen 14 variiert werden.

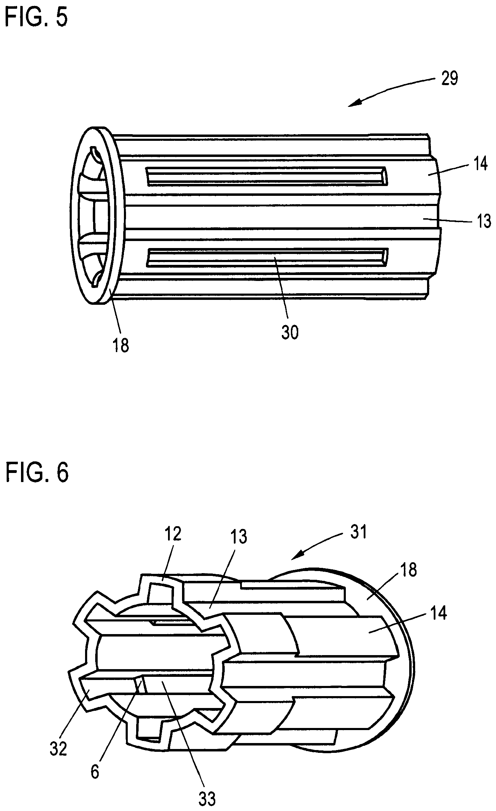

Fig. 5 zeigt ein weiteres Messrohr 29, das alternativ zum Messrohr 5 in dem Ultraschallzähler 1 nutzbar wäre. Während sich die Durchbrechungen 15, 24, 25, 26 in den Messrohren 5, 28 jeweils bis zu einem dem Fluidauslass 3 zugewandten Ende des Messrohrs 5, 28 erstrecken, sind die Durchbrechungen 30 des Messrohrs 29 von den beiden Enden des Messrohrs 29 beabstandet und mittig in den Rillen 14 des Messrohrs 29 angeordnet. Je nach konkreter Ausbildung des Ultraschallwandlers 1 kann ein derartiges Messrohr 29 vorteilhaft sein, um die Strömung im Mittelbereich des Messrohres zu stabilisieren. Da der zu den Durchbrechungen 30 benachbarte Ausgleichsbereich 19, der mit dem fluidausflussseitigen Fluidvolumen 17 verbunden ist, durch das Dichtelement 18 von dem Fluideinlass 2 getrennt ist, ist sichergestellt, dass das gesamte über den Fluideinlass 2 zugeführte Fluid auch durch das Messrohr geführt wird. Es muss somit nicht sichergestellt werden, dass Fluid, das durch die Durchbrechungen 30 in das Austauschvolumen 16 eintritt, zurück in das Messrohr 29 geführt wird. Es ist auch möglich, dass das Fluid nach dem Austritt durch die Durchbrechung 30 entlang der Außenfläche des Messrohrs 29 zu dem Fluidauslass 3 geführt wird.

Wie bereits erläutert dienen die Durchbrechungen 15, 24, 25, 26, 30 in den vorangehenden Ausführungsbeispielen im Wesentlichen zur effektiven Vertiefung der Rillen. Es ist somit auch möglich, statt der Durchbrechungen 15, 24, 25, 26, 30 Vertiefungsbereiche 32 zu nutzen, wie sie für das Messrohr 31 in Fig. 6 dargestellt sind. Hierbei ist eine Stufe 6 zwischen einem Normalbereich 33 und einem Vertiefungsbereich 32 der jeweiligen Rillen 14 vorgesehen. Die vorangehenden Erläuterungen bezüglich der möglichen Positionen und Ausbildungen der Durchbrechungen lassen sich hierbei selbstverständlich auch auf die Ausbildungen der Vertiefungsbereiche 32 bzw. der Stufen 6 übertragen. Beispielsweise können diese in verschiedenen Rillen 14 an unterschiedlichen Positionen angeordnet sein oder unterschiedlich ausgebildet sein. So können die Stufen 6 unterschiedliche Höhen aufweisen, um eine Symmetrie eines Strömungsquerschnitts zu brechen. Es ist auch möglich, die Vertiefungsbereiche 32 mittig im Messrohr 31 anzuordnen, wie dies für die Durchbrechungen 30 in Fig. 5 dargestellt ist.

In der bisherigen Erläuterung wurde davon ausgegangen, dass die Seitenwand 12 der Messrohre 5, 28, 29, 31 im Bereich der Erhebungsbereiche 13 im Wesentlichen parallel zu einer Mittelgeraden des jeweiligen Messrohrs 5, 28, 29, 31 geführt ist. Um die Strömung im Messrohr 5, 28, 29, 31 weiter zu stabilisieren, ist es jedoch möglich, den Strömungsquerschnitt zumindest in einem in Strömungsrichtung vor den Stufen 6 bzw. den Durchbrechungen 15, 24, 25, 26, 30 gelegenen Abschnitt des Messrohres 5, 28, 29, 31 in Richtung des Fluidauslasses 3 zu verengen, um die Strömungsgeschwindigkeit kontinuierlich zu erhöhen. In dem Bereich der Durchbrechungen 15, 24, 25, 26, 30 bzw. der Stufen 34 und stromabwärts hiervon kann der Strömungsquerschnitt konstant gehalten oder erweitert werden.

Um eine Festsetzung von Verschmutzungen in den Rillen 14, den Durchbrechungen 15, 24, 25, 26, 30 und/oder den Vertiefungen 32 zu verhindern bzw. zu verringern, ist es möglich, dass diese sich jeweils in Richtung des Strömungsauslasses 3 weiten.

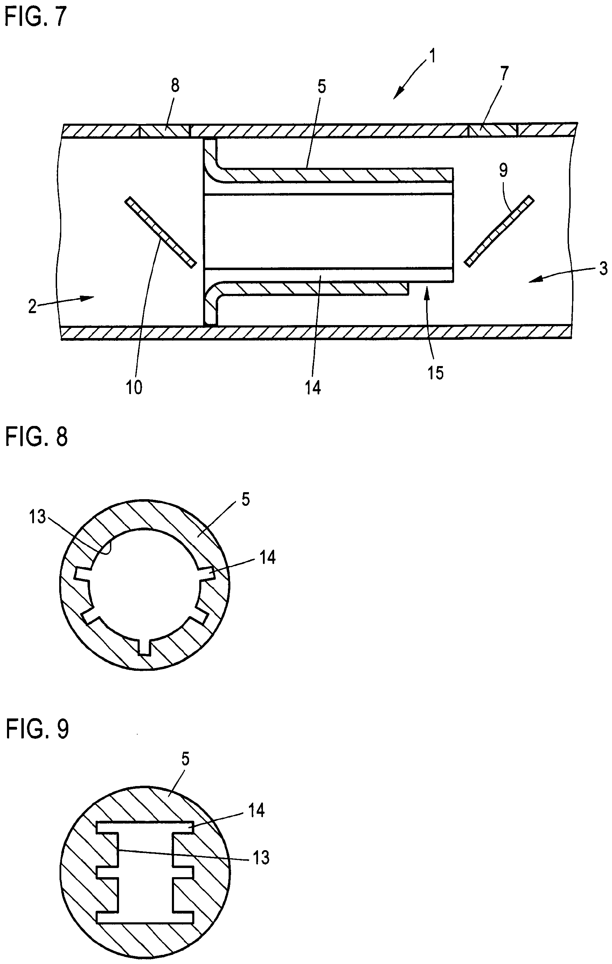

Fig. 7 zeigt ein weiteres Ausführungsbeispiel eines Ultraschallzählers 1. Der Aufbau des Ultraschallzählers 1 entspricht im Wesentlichen dem Aufbau des in Fig. 1 gezeigten Ultraschallzählers 1. Daher sollen im Folgenden ausschließlich die Unterschiede zwischen diesen beiden Ultraschallzählern 1 dargestellt werden. In dem in Fig. 7 gezeigten Ultraschallzähler 1 ist fluidauslassseitig ein gewinkelt zu der Strömungsrichtung stehendes Reflektionselement 9 vorgesehen, durch das Ultraschall von einem Ultraschallwandler 7 in das Messrohr 5 oder umgekehrt reflektierbar ist. Das Reflektionselement 9 ist in einem ersten Umfangsabschnitt des Messrohres 5 weiter von dem Messrohr 5 entfernt als in einem zweiten Umfangsabschnitt. Das Messrohr 5 ist in Fig. 7 so dargestellt, dass der erste Umfangsabschnitt der Oberseite der Figur zugewandt ist und der zweite Umfangsabschnitt der Unterseite. Das Messrohr 5 weist zwei Rillen 14, nämlich eine auf der Ober- und eine auf der Unterseite, auf. Ausschließlich die Rille 14 auf der Unterseite des Messrohres 5, also eine Rille 14 in dem zweiten Umfangsabschnitt, weist eine Durchbrechung 15 auf. Diese asymmetrische Anordnung der Durchbrechung ermöglicht es, dass eine Stauung in jenem Bereich, in dem das Reflektionselement 9 relativ nahe an dem Messrohr 5 liegt, vermieden wird. Hierdurch können plötzliche Strömungsumschläge aufgrund von Stauungen vermieden werden.

Die Fig. 8 und 9 zeigen zwei weitere Ausführungsbeispiele für Messrohre 5, die in erfindungsgemäßen Ultraschallzählern genutzt werden können. Hierbei sind jeweils Schnitte senkrecht zur Strömungsrichtung gezeigt, und zwar in Bereichen, in denen weder Vertiefungsbereiche oder Stufen noch Durchbrechungen angeordnet sind. Die Fig. 8 und 9 zeigen somit ausschließlich den jeweiligen Strömungsquerschnitt des jeweiligen Messrohres 5 mit den den jeweiligen Strömungsquerschnitt vergrößernden Rillen 14. Der Strömungsquerschnitt des Messrohrs hat abgesehen von den Rillen in Fig. 8 im Wesentlichen die Form eines Kreises und in Fig. 9 im Wesentlichen die Form eines Rechtecks.

In Fig. 8 sind fünf Rillen vorgesehen und in Fig. 9 sechs Rillen. Alternativ wäre es beispielsweise möglich, nur eine Rille vorzusehen oder bis zu zehn Rillen vorzusehen.

Während die bisherigen Ausführungsbeispiele regelmäßige Rillenstrukturen aufweisen, bei denen alle Erhebungsbereiche 13 zwischen jeweils zwei Rillen 14 in Umfangsrichtung die gleiche Ausdehnung aufweisen, ist dies in Fig. 8 nicht der Fall. Die verschiedenen Erhebungsbereiche 13 weisen hier in Umfangsrichtung des Messrohres 5 voneinander unterschiedliche Ausdehnungen auf.

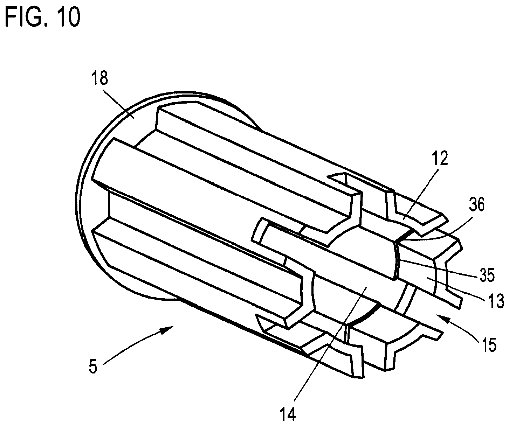

Fig. 10 zeigt ein weiteres Ausführungsbeispiel eines Messrohres 5, das in erfindungsgemäßen Ultraschallzählern genutzt werden kann. Der grundsätzliche Aufbau des Messrohes entspricht dem in Fig. 2 dargestellten Messrohr. Im Gegensatz zu diesem Messrohr sind jedoch zusätzlich zu den Durchbrechungen 15 Seitenwandstufen 35 und Rillenwandstufen 36 vorgesehen, an denen sich der Strömungsquerschnitt des Messrohres 5 an jene Position in Strömungsrichtung, an der die Durchbrechungen 15 beginnen, zusätzlich erweitert. Diese Stufen erfüllen zwei Funktionen. Zum einen wird durch die zusätzliche Erweiterung des Strömungsquerschnitts eine leichtere Umströmung eines fluidauslassseitig angeordneten Reflexionselementes ermöglicht. Zudem wird eine Herstellbarkeit des Messrohres 5 durch Spritzgussverfahren verbessert. Zur Stabilisierung der Strömungsführung kann es gewünscht sein, dass stromaufwärts der Durchbrechungen 15 der Strömungsquerschnitt in Strömungsrichtung zunächst kontinuierlich verengt wird, um sich ab jenem Punkt, an dem die Durchbrechungen 15 beginnen, wieder zu weiten. Soll das Messrohr 5 durch Spritzguss hergestellt werden, so ist es in diesem Fall vorteilhaft, die Zusammensetzebene der Spritzgussform genau an jene Position zu setzen, an der der Übergang von einer konischen Verengung zu einer konischen Erweiterung stattfindet, das heißt an den Anfangspunkt der Durchbrechung 15. An der Zusammensetzebene einer Spritzgussform resultieren, wenn ebene Wände senkrecht zur Zusammensetzebene der Spritzgussform gebildet werden sollen, typischerweise Entformungsgrade. Dies wird in der beschriebenen Ausgestaltung dadurch verhindert, dass in der Zusammensetzebene Stufen vorgesehen werden. Hierdurch kann die Ausbildung entsprechender Entformungsgrade verhindert werden.

### Bezugszeichenliste

- 1: Ultraschallzähler
- 2: Fluideinlass
- 3: Fluidauslass
- 4: Strömungskanal
- 5: Messrohr
- 6: Stufe
- 7: Ultraschallwandler
- 8: Ultraschallwandler
- 9: Reflektionselement
- 10: Reflektionselement
- 11: Halteelement
- 12: Seitenwand
- 13: Erhebungsbereich
- 14: Rille
- 15: Durchbrechung
- 16: Austauschvolumen
- 17: Fluidvolumen
- 18: Dichtelement
- 19: Fluidvolumen
- 20: Mittelgerade
- 21: Gehäuse
- 22: Rillenboden
- 23: Rillenwand
- 24: Durchbrechung
- 25: Durchbrechung
- 26: Durchbrechung
- 27: Bereich
- 28: Messrohr
- 29: Messrohr
- 30: Durchbrechung
- 31: Messrohr
- 32: Vertiefungsbereich
- 33: Normalbereich
- 34: Halteelement
- 35: Seitenwandstufe
- 36: Rillenwandstufe

## Patentansprüche

1. Ultraschallzähler zur Erfassung einer Durchflussmenge eines Fluids mit einem Fluideinlass (2), einem Fluidauslass (3) und einem den Fluideinlass (2) mit dem Fluidauslass (3) verbindenden Strömungskanal (4), wobei der Strömungskanal (4) ein Messrohr (5, 28, 29, 31) aufweist, das sich geradlinig in eine Strömungsrichtung erstreckt, wobei eine Innenwand einer einen Strömungsquerschnitt des Messrohrs (5, 28, 29, 31) begrenzenden Seitenwand (12) wenigstens eine sich in Strömungsrichtung erstreckende Rille (14) aufweist, die den Strömungsquerschnitt vergrößert, **dadurch gekennzeichnet, dass** die Seitenwand (12) ausschließlich innerhalb der Rille (14) eine Durchbrechung (15, 24, 25, 26, 30) aufweist, die eine Rillentiefe der Rille (14) zur Stabilisierung der Strömungsführung lokal erhöht, und/oder eine Stufe (34) in Strömungsrichtung zwischen einem Normalbereich (33) und einem Vertiefungsbereich (32) aufweist, wobei in dem Vertiefungsbereich (32) die Rillentiefe der Rille (14) größer als in dem Normalbereich (33) ist.

2. Ultraschallzähler nach Anspruch 1, **dadurch gekennzeichnet, dass** die Innenwand mehrere Rillen (14) aufweist, wobei eine der Rillen (14) die Durchbrechung (15, 24, 25, 26, 30) und/oder die Stufe (34) aufweist oder wobei mehrere der Rillen (14) eine jeweilige Durchbrechung (15, 24, 25, 26, 30) und/oder eine jeweilige Stufe (34) aufweisen.

3. Ultraschallzähler nach einem der vorangehenden Ansprüche, **dadurch gekennzeichnet, dass** die Rille (14) jeweils einen ebenen oder kreissegmentförmigen Rillenboden (22) und gewinkelt zu dem Rillenboden (22) verlaufende Rillenwände (23) aufweist.

4. Ultraschallzähler nach einem der vorangehenden Ansprüche, **dadurch gekennzeichnet, dass** die Durchbrechung (15, 24, 25, 26, 30) ein von der Innenfläche der Seitenwand (12) des Messrohres (5, 28, 29, 31) eingefasstes Messvolumen mit einem an eine Außenfläche der Seitenwand (12) angrenzenden Austauschvolumen (16) verbindet, um einen Fluidaustausch zwischen diesen Volumen zu ermöglichen, wobei insbesondere vorgesehen ist, dass der Ultraschallzähler ein vorzugsweise einteilig mit dem Messrohr (5, 28, 29, 31) ausgebildetes Dichtelement (18) aufweist, das das Austauschvolumen (16) von dem Fluideinlass (2) trennt, sodass ein Fluidaustausch zwischen Fluideinlass (2) und Austauschvolumen (16) in dem Ultraschallzähler (1) ausschließlich über das Messrohr (5, 28, 29, 31) möglich ist.

5. Ultraschallzähler nach einem der vorangehenden Ansprüche, **dadurch gekennzeichnet, dass** sich die Durchbrechung (15, 24, 25, 26, 30) und/oder der Vertiefungsbereich (32) bis zu einem dem Fluidauslass (3) zugewandten Ende des Messrohrs (5, 28, 29, 31) erstrecken oder dass die Durchbrechung (15, 24, 25, 26, 30) und/oder der Vertiefungsbereich (31) sowohl von einem dem Fluidauslass (3) zugewandten Ende als auch von einem dem Fluideinlass (2) zugewandten Ende des Messrohres (5, 28, 29, 31) beabstandet sind.

6. Ultraschallzähler nach einem der vorangehenden Ansprüche, wobei die Seitenwand (12) mehrere Rillen (14) aufweist, die jeweils eine Durchbrechung (15, 24, 25, 26, 30) und/oder eine Stufe (34) aufweisen, **dadurch gekennzeichnet, dass** die Wandstärken der Seitenwand (12) im Bereich wenigstens zweier Durchbrechungen (15, 24, 25, 26, 30) und/oder die Abmessungen wenigstens zweier Durchbrechungen (15, 24, 25, 26, 30) und/oder wenigstens zweier Vertiefungsbereiche (32) in Strömungsrichtung und/oder Umfangsrichtung und/oder die Positionen wenigstens zweier Durchbrechungen (15, 24, 25, 26, 30) und/oder wenigstens zweier Stufen (34) bezüglich der jeweiligen Rille (14) und/oder die Höhen wenigstens zweier Stufen (34) voneinander unterschiedlich sind.

7. Ultraschallzähler nach einem der vorangehenden Ansprüche, **dadurch gekennzeichnet, dass** in einem die Durchbrechung (15, 24, 25, 26, 30) begrenzenden Abschnitt der Seitenwand (12) die Wandstärke der Seitenwand (12) und/oder die Position der Außenfläche der Seitenwand (12) senkrecht zur Strömungsrichtung entlang des Rands der Durchbrechung (15, 24, 25, 26, 30) variieren.

8. Ultraschallzähler nach einem der vorangehenden Ansprüche, **dadurch gekennzeichnet, dass** die Innenwand mehrere Rillen (14) aufweist, wobei die Rillentiefe in verschiedenen der Rillen (14) an einer in Strömungsrichtung betrachtet gleichen Position voneinander unterschiedlich ist.

9. Ultraschallzähler nach einem der vorangehenden Ansprüche, **dadurch gekennzeichnet, dass** die Breite in die Umfangsrichtung der oder jeder Rille (14) und/oder des oder jedes Vertiefungsbereichs (32) und/oder der oder jeder Durchbrechung (15, 24, 25, 26, 30) in Richtung des Fluidauslasses (3) zunimmt.

10. Ultraschallzähler nach einem der vorangehenden Ansprüche, **dadurch gekennzeichnet, dass** sich der Strömungsquerschnitt in zumindest einem Abschnitt des Messrohres (5, 28, 29, 31) in Richtung des Fluidauslasses (3) kontinuierlich verkleinert, um die Strömungsgeschwindigkeit des Fluids kontinuierlich zu erhöhen.

11. Ultraschallzähler nach einem der vorangehenden Ansprüche, **dadurch gekennzeichnet, dass** die Innenfläche der Seitenwand (12) in zumindest 30% des Umfangs des Messrohrs (5, 28, 29, 31) durch außerhalb der Rille oder zwischen den Rillen liegende Erhebungsbereiche (13) gebildet ist.

12. Ultraschallzähler nach einem der vorangehenden Ansprüche, **dadurch gekennzeichnet, dass** die Wandstärke der Seitenwand (12) zumindest in dem Bereich der Durchbrechung (15, 24, 25, 26, 30) wenigstens 20% der Rillentiefe beträgt.

13. Ultraschallzähler nach einem der vorangehenden Ansprüche, **dadurch gekennzeichnet, dass** die Ausdehnung des Vertiefungsbereichs (32) und/oder der Durchbrechung (15, 24, 25, 26, 30) in Strömungsrichtung wenigstens 5% der Länge des Messrohres (5, 28, 29, 31) beträgt.

14. Ultraschallzähler nach einem der vorangehenden Ansprüche, **dadurch gekennzeichnet, dass** er fluidauslassseitig ein gewinkelt zu der Strömungsrichtung stehendes Reflektionselement (9) aufweist, durch das Ultraschall von einem Ultraschallwandler (7) in das Messrohr (5) oder umgekehrt reflektierbar ist, wobei das Reflektionselement (9) in einem ersten Umfangsabschnitt des Messrohres (5) weiter von dem Messrohr (5) entfernt ist, als in einem zweiten Umfangsabschnitt, wobei ausschließlich eine Rille (14) oder mehrere Rillen (14) in dem zweiten Umfangsabschnitt eine Durchbrechung (15, 24, 25, 26, 30) und/oder eine Stufe (6) aufweist oder aufweisen.

15. Ultraschallzähler nach einem der vorangehenden Ansprüche, **dadurch gekennzeichnet, dass** die Innenwand genau eine Rille (14) oder zwischen zwei und zehn Rillen (14) aufweist oder dass die Innenwand wenigstens zwei Rillen (14) aufweist, wobei wenigstens zwei Erhebungsbereiche (13) der Innenwand, die sich jeweils zwischen zwei der Rillen (14) erstrecken, voneinander unterschiedliche Ausdehnungen in Umfangsrichtung aufweisen.

16. Ultraschallzähler nach einem der vorangehenden Ansprüche, **dadurch gekennzeichnet, dass** der Strömungsquerschnitt des Messrohres (5, 28, 29, 31) abgesehen von den Rillen (14) die Form eines Kreises oder eines Ovals oder eines Vielecks aufweist.

## Claims

1. Ultrasonic meter for detecting a flow rate of a fluid, having a fluid inlet (2), a fluid outlet (3) and a flow channel (4) connecting the fluid inlet (2) to the fluid outlet (3), wherein the flow channel (4) has a measuring tube (5, 28, 29, 31) which extends in a straight line in a flow direction, wherein an inner wall of a side wall (12) delimiting a flow cross section of the measuring tube (5, 28, 29, 31) has at least one groove (14) extending in the flow direction, which enlarges the flow cross section, **characterized in that** the side wall (12) has an opening (15, 24, 25, 26, 30) exclusively within the groove (14), which increases the groove depth of the groove (14) locally to stabilize the flow guidance, and/or has a step (34) in the flow direction between a normal region (33) and a recessed region (32), wherein the groove depth of the groove (14) is greater in the recessed region (32) than in the normal region (33) .

2. Ultrasonic meter according to Claim 1, **characterized in that** the inner wall has a plurality of grooves (14), wherein one of the grooves (14) has the opening (15, 24, 25, 26, 30) and/or the step (34), or wherein a plurality of the grooves (14) have a respective opening (15, 24, 25, 26, 30) and/or a respective step (34).

3. Ultrasonic meter according to one of the preceding claims, **characterized in that** the groove (14) in each case has a flat or circular segment-shaped groove base (22) and angled groove walls (23) extending to the groove base (22).

4. Ultrasonic meter according to one of the preceding claims, **characterized in that** the opening (15, 24, 25, 26, 30) connects a measuring volume bordered by the inner surface of the side wall (12) of the measuring tube (5, 28, 29, 31) to an exchange volume (16) adjoining an outer surface of the side wall (12), in order to permit fluid exchange between these volumes, wherein provision is in particular made that the ultrasonic meter has a sealing element (18), preferably formed in one piece with the measuring tube (5, 28, 29, 31), which separates the exchange volume (16) from the fluid inlet (2), so that a fluid exchange between the fluid inlet (2) and exchange volume (16) in the ultrasonic meter (1) is possible only via the measuring tube (5, 28, 29, 31).

5. Ultrasonic meter according to one of the preceding claims, **characterized in that** the opening (15, 24, 25, 26, 30) and/or the recessed region (32) extend as far as an end of the measuring tube (5, 28, 29, 31) that faces the fluid outlet (3), or **in that** the opening (15, 24, 25, 26, 30) and/or the recessed region (31) are spaced apart both from an end that faces the fluid outlet (3) and also from an end of the measuring tube (5, 28, 29, 31) that faces the fluid inlet (2).

6. Ultrasonic meter according to one of the preceding claims, wherein the side wall (12) has a plurality of grooves (14), which each have an opening (15, 24, 25, 26, 30) and/or a step (34), **characterized in that** the wall thicknesses of the side wall (12) in the area of at least two openings (15, 24, 25, 26, 30) and/or the dimensions of at least two openings (15, 24, 25, 26, 30) and/or at least two recessed regions (32) in the flow direction and/or circumferential direction, and/or the positions of at least two openings (15, 24, 25, 26, 30) and/or at least two steps (34) with respect to the respective groove (14), and/or the heights of at least two steps (34) differ from one another.

7. Ultrasonic meter according to one of the preceding claims, **characterized in that** in a section of the side wall (12) that delimits the opening (15, 24, 25, 26, 30), the wall thickness of the side wall (12) and/or the position of the outer surface of the side wall (12) at right angles to the flow direction vary along the edge of the opening (15, 24, 25, 26, 30).

8. Ultrasonic meter according to one of the preceding claims, **characterized in that** the inner wall has a plurality of grooves (14), wherein the groove depth in various grooves (14) is different from one another at the same position viewed in the flow direction.

9. Ultrasonic meter according to one of the preceding claims, **characterized in that** the width in the circumferential direction of the or each groove (14) and/or of the or each recessed region (32) and/or of the or each opening (15, 24, 25, 26, 30) increases in the direction of the fluid outlet (3).

10. Ultrasonic meter according to one of the preceding claims, **characterized in that** the flow cross section in at least one section of the measuring tube (5, 28, 29, 31) decreases continuously in the direction of the fluid outlet (3), in order to increase the flow velocity of the fluid continuously.

11. Ultrasonic meter according to one of the preceding claims, **characterized in that** the inner surface of the side wall (12) in at least 30% of the circumference of the measuring tube (5, 28, 29, 31) is formed by elevated regions (13) located outside the groove or between the grooves.

12. Ultrasonic meter according to one of the preceding claims, **characterized in that** the wall thickness of the side wall (12), at least in the region of the opening (15, 24, 25, 26, 30), is at least 20% of the groove depth.

13. Ultrasonic meter according to one of the preceding claims, **characterized in that** the extent of the recessed region (32) and/or the opening (15, 24, 25, 26, 30) in the flow direction is at least 5% of the length of the measuring tube (5, 28, 29, 31).

14. Ultrasonic meter according to one of the preceding claims, **characterized in that** on the fluid outlet side it has a reflection element (9) standing at an angle to the flow direction, by means of which ultrasound from an ultrasonic converter (7) can be reflected into the measuring tube (5) or vice versa, wherein the reflection element (9) is further removed from the measuring tube (5) in a first circumferential section of the measuring tube (5) than in a second circumferential section, wherein only one groove (14) or a plurality of grooves (14) in the second circumferential section has or have an opening (15, 24, 25, 26, 30) and/or a step (6).

15. Ultrasonic meter according to one of the preceding claims, **characterized in that** the inner wall has exactly one groove (14) or between two and ten grooves (14), or **in that** the inner wall has at least two grooves (14), wherein at least two elevated regions (13) of the inner wall which each extend between two of the grooves (14) have extents in the circumferential direction that differ from each other.

16. Ultrasonic meter according to one of the preceding claims, **characterized in that** the flow cross section of the measuring tube (5, 28, 29, 31), apart from the grooves (14), has the shape of a circle or an oval or a polygon.

## Revendications

1. Compteur à ultrasons pour la détection d'un débit d'un fluide, comprenant une entrée de fluide (2), une sortie de fluide (3) et un canal d'écoulement (4) reliant l'entrée de fluide (2) à la sortie de fluide (3), le canal d'écoulement (4) comprenant un tube de mesure (5, 28, 29, 31), qui s'étend de manière rectiligne dans une direction d'écoulement, une paroi intérieure d'une paroi latérale (12) délimitant une section transversale d'écoulement du tube de mesure (5, 28, 29, 31) comprenant au moins une rainure (14) s'étendant dans la direction d'écoulement, qui agrandit la section transversale d'écoulement, **caractérisé en ce que** la paroi latérale (12) comprend, exclusivement à l'intérieur de la rainure (14), une ouverture (15, 24, 25, 26, 30), qui augmente localement une profondeur de rainure de la rainure (14) pour la stabilisation du guidage de l'écoulement, et/ou comprend un gradin (34) dans la direction d'écoulement entre une zone normale (33) et une zone en creux (32), la profondeur de rainure de la rainure (14) étant plus grande dans la zone en creux (32) que dans la zone normale (33) .

2. Compteur à ultrasons selon la revendication 1, **caractérisé en ce que** la paroi intérieure comprend plusieurs rainures (14), une des rainures (14) comprenant l'ouverture (15, 24, 25, 26, 30) et/ou le gradin (34) ou plusieurs des rainures (14) comprenant une ouverture respective (15, 24, 25, 26, 30) et/ou un gradin respectif (34) .

3. Compteur à ultrasons selon l'une quelconque des revendications précédentes, **caractérisé en ce que** la rainure (14) présente respectivement un fond de rainure (22) plat ou en forme de segment de cercle et des parois de rainure (23) s'étendant à un angle par rapport au fond de rainure (22).

4. Compteur à ultrasons selon l'une quelconque des revendications précédentes, **caractérisé en ce que** l'ouverture (15, 24, 25, 26, 30) relie un volume de mesure entouré par la surface intérieure de la paroi latérale (12) du tube de mesure (5, 28, 29, 31) à un volume d'échange (16) adjacent à une surface extérieure de la paroi latérale (12), afin de permettre un échange de fluide entre ces volumes, il étant notamment prévu que le compteur à ultrasons comprend un élément d'étanchéité (18) de préférence configuré d'un seul tenant avec le tube de mesure (5, 28, 29, 31), qui sépare le volume d'échange (16) de l'entrée de fluide (2), de telle sorte qu'un échange de fluide entre l'entrée de fluide (2) et le volume d'échange (16) dans le compteur à ultrasons (1) est possible exclusivement par l'intermédiaire du tube de mesure (5, 28, 29, 31).

5. Compteur à ultrasons selon l'une quelconque des revendications précédentes, **caractérisé en ce que** l'ouverture (15, 24, 25, 26, 30) et/ou la zone en creux (32) s'étendent jusqu'à une extrémité du tube de mesure (5, 28, 29, 31) tournée vers la sortie de fluide (3), ou **en ce que** l'ouverture (15, 24, 25, 26, 30) et/ou la zone en creux (31) sont espacées aussi bien d'une extrémité tournée vers la sortie de fluide (3) que d'une extrémité du tube de mesure (5, 28, 29, 31) tournée vers l'entrée de fluide (2).

6. Compteur à ultrasons selon l'une quelconque des revendications précédentes, la paroi latérale (12) comprenant plusieurs rainures (14), qui comprennent respectivement une ouverture (15, 24, 25, 26, 30) et/ou un gradin (34), **caractérisé en ce que** les épaisseurs de paroi de la paroi latérale (12) dans la zone d'au moins deux ouvertures (15, 24, 25, 26, 30) et/ou les dimensions d'au moins deux ouvertures (15, 24, 25, 26, 30) et/ou d'au moins deux zones en creux (32) dans la direction d'écoulement et/ou dans la direction circonférentielle et/ou les positions d'au moins deux ouvertures (15, 24, 25, 26, 30) et/ou d'au moins deux gradins (34) par rapport à la rainure respective (14) et/ou les hauteurs d'au moins deux gradins (34) diffèrent les unes des autres.

7. Compteur à ultrasons selon l'une quelconque des revendications précédentes, **caractérisé en ce que**, dans une partie de la paroi latérale (12) délimitant l'ouverture (15, 24, 25, 26, 30), l'épaisseur de paroi de la paroi latérale (12) et/ou la position de la surface extérieure de la paroi latérale (12) perpendiculairement à la direction d'écoulement varient le long du bord de l'ouverture (15, 24, 25, 26, 30).

8. Compteur à ultrasons selon l'une quelconque des revendications précédentes, **caractérisé en ce que** la paroi intérieure comprend plusieurs rainures (14), la profondeur de rainure dans différentes rainures (14) étant différente les unes des autres à une même position vue dans la direction d'écoulement.

9. Compteur à ultrasons selon l'une quelconque des revendications précédentes, **caractérisé en ce que** la largeur dans la direction circonférentielle de la ou de chaque rainure (14) et/ou de la ou de chaque zone en creux (32) et/ou de la ou de chaque ouverture (15, 24, 25, 26, 30) augmente dans la direction de la sortie de fluide (3).

10. Compteur à ultrasons selon l'une quelconque des revendications précédentes, **caractérisé en ce que** la section transversale d'écoulement dans au moins une partie du tube de mesure (5, 28, 29, 31) diminue continuellement en direction de la sortie de fluide (3), afin d'augmenter continuellement la vitesse d'écoulement du fluide.

11. Compteur à ultrasons selon l'une quelconque des revendications précédentes, **caractérisé en ce que** la surface intérieure de la paroi latérale (12) est formée, sur au moins 30 % de la circonférence du tube de mesure (5, 28, 29, 31), par des zones en relief (13) situées à l'extérieur de la rainure ou entre les rainures.

12. Compteur à ultrasons selon l'une quelconque des revendications précédentes, **caractérisé en ce que** l'épaisseur de paroi de la paroi latérale (12) est d'au moins 20 % de la profondeur de rainure au moins dans la zone de l'ouverture (15, 24, 25, 26, 30).

13. Compteur à ultrasons selon l'une quelconque des revendications précédentes, **caractérisé en ce que** l'étendue de la zone en creux (32) et/ou de l'ouverture (15, 24, 25, 26, 30) dans la direction d'écoulement est d'au moins 5 % de la longueur du tube de mesure (5, 28, 29, 31).

14. Compteur à ultrasons selon l'une quelconque des revendications précédentes, **caractérisé en ce qu'**il comprend du côté de la sortie de fluide un élément de réflexion (9) situé à un angle par rapport à la direction d'écoulement, par lequel des ultrasons peuvent être réfléchis depuis un transducteur d'ultrasons (7) dans le tube de mesure (5) ou inversement, l'élément de réflexion (9) étant plus éloigné du tube de mesure (5) dans une première partie circonférentielle du tube de mesure (5) que dans une deuxième partie circonférentielle, exclusivement une rainure (14) ou plusieurs rainures (14) dans la deuxième partie circonférentielle comprenant une ouverture (15, 24, 25, 26, 30) et/ou un gradin (6).

15. Compteur à ultrasons selon l'une quelconque des revendications précédentes, **caractérisé en ce que** la paroi intérieure comprend exactement une rainure (14) ou entre deux et dix rainures (14), ou **en ce que** la paroi intérieure comprend au moins deux rainures (14), au moins deux zones en relief (13) de la paroi intérieure, qui s'étendent respectivement entre deux des rainures (14), présentant des étendues différentes l'une de l'autre dans la direction circonférentielle.

16. Compteur à ultrasons selon l'une quelconque des revendications précédentes, **caractérisé en ce que** la section transversale d'écoulement du tube de mesure (5,28, 29, 31) présente, à l'exception des rainures (14), la forme d'un cercle ou d'un ovale ou d'un polygone.
